# EUROPEAN PATENT SPECIFICATION

(11) **EP 0 508 379 B1**
(45) Date of publication and mention of the grant of the patent: **13.09.1995**
(21) Application number: 92106006.7
(22) Date of filing: 07.04.1992
(51) Int. Cl.: G01K 7/22

(54) **Fluid-temperature sensor integrated with a connector**
Flüssigkeitstemperatursensor mit integriertem Verbinder
Capteur de température d'un fluide comprenant un connecteur

(30) Priority: 12.04.1991 IT TO910081 U
(43) Date of publication of application: 14.10.1992
(73) Proprietor: MAGNETI MARELLI S.p.A., 20145 Milano (IT)
(72) Inventor: de Giovanni, Arturo, I-20081 Abbiategrasso (IT)
(74) Representative: Cerbaro, Elena

(56) References cited:
- DE-A- 1 465 836
- GB-A- 2 207 509
- PATENT ABSTRACTS OF JAPAN vol. 6, no. 221 (P-153)(1099) 5 November 1982 & JP-A-57 125 333

## Description

The present invention relates to a sensor for sensing the temperature of a fluid and which is integrated with a connector, comprising a probe having two terminals electrically connected to a metal insert. Such sensor is known from GB-A-2 207 509.

In this known sensor, the insert comprises two pins connected together by a bridge which must be cut in order to separate the two pins electrically. For this purpose, an element for connecting the two pins mechanically is previously co-moulded in the insert. The bridge is cut after this step but before the connection of the probe terminals to the pins and the moulding of the integrated connector.

This connector has the disadvantage of requiring an additional moulding operation. Moreover, the connection of the independent pins to the terminals of the probe tends to deform the connecting element and hence the relative position of the pins, reducing the functional capacity of the sensor.

The object of the invention is to provide a temperature sensor which is very simple and eliminates the disadvantages of known sensors listed above.

This object is achieved by the sensor of the invention in which the insert is formed by two flat pins integral with an intermediate bridge and each having a bent portion for gripping the corresponding terminal of the probe, and which is characterised in that the insert is co-moulded and integrated with the connector, an aperture being formed in the connector which leaves the bridge uncovered.

For a better understanding of the invention, a preferred embodiment is described below by way of example with the aid of the appended drawings, in which:
Figures 1 and 2 are a front view and a partially sectioned side view respectively of a sensor according to the invention;
Figure 3 is the sensor of Figure 2 with a particular connection to a support;
Figure 4 is the sensor of Figure 2 assembled with an additional connector;
Figure 5 shows an insert for the sensor of Figure 1;
Figures 6 and 7 show two sections of the insert taken on the lines VI-VI and VII-VII respectively of Figure 5;
Figures 8 and 9 show the sensor of Figures 1 and 2 in a first stage of its manufacture;
Figures 10 and 11 show the sensor of Figures 1 and 2 in a further stage of its manufacture;
Figure 12 show a series of schematic arrangements of the sensor.

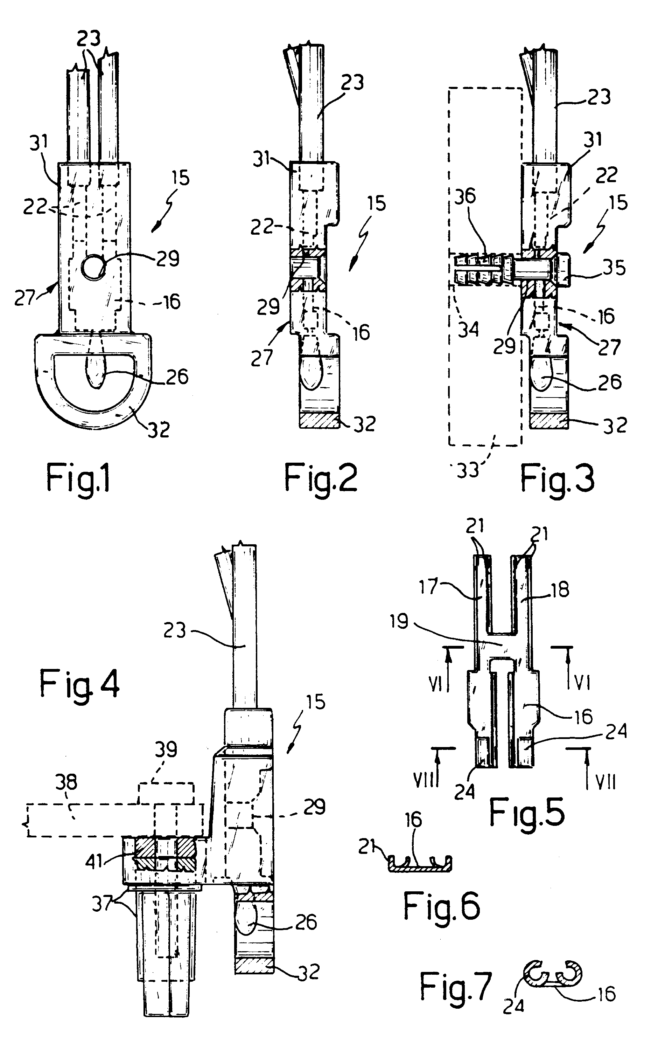

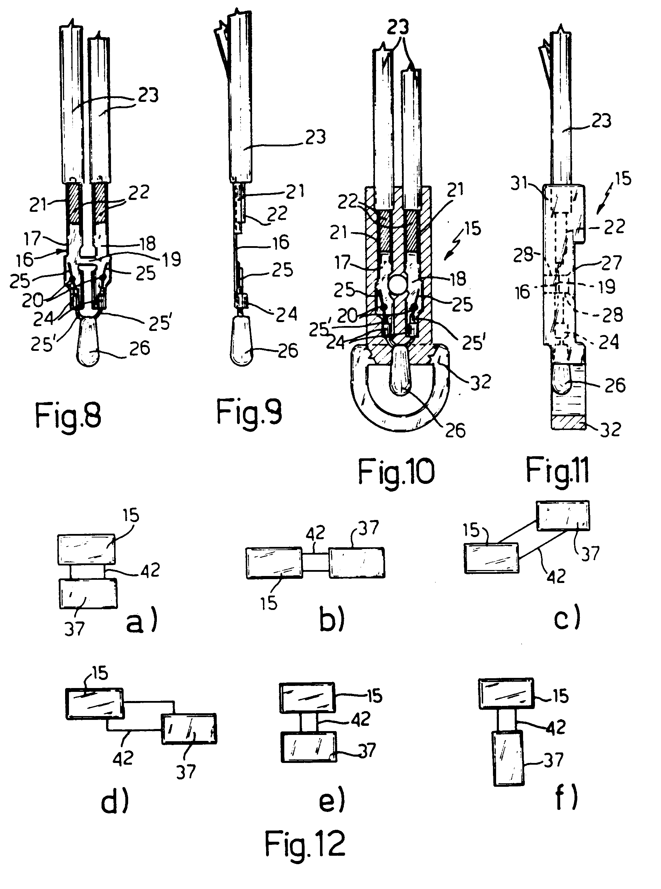

With reference to Figures 1 and 2, a temperature sensor for a fluid, for example a gas, integrated with an electrical connector, is generally indicated 15. The sensor 15 includes an insert 16 of electrically conductive metal formed by two pins 17 and 18 which are initially interconnected by a bridge 19 (Figures 8 and 9) integral therewith.

Each pin 17 and 18 includes a channel-shape portion 21 (see also Figures 5 to 7) whose side walls are bent over a corresponding two lead terminals 22 for cables 23 which are connected thereby to the insert 16. Each pin 17 and 18 further includes a C-section portion 24 which is adapted to house a corresponding rheophore or terminal 25 of a probe 26 for measuring the temperature of the fluid in which it is immersed. To advantage the probe 26 may be of the NTC (Negative Temperature Compensation) and those portions (indicated 25' in Figure 8) of the connecting rheophors leaving the body of the probe 26 must be insulated.

Each portion 24 is first squeezed on to the corresponding insulating portions 25' of the terminals 25 to achieve a preliminary mechanical connection. The terminals 25 are also connected to the pins 17 and 18 by double welding, that is first by electrical welding, for example on the side wall of the portion 24, and subsequently by soldering on the terminal 25 with the addition of solder material 20, for example tin. Thus a redundancy is achieved in the connection which increases the reliability of the integrated sensor 15.

The assembly constituted by the insert 16 with the lead terminals 22 of the cables 23 and the terminals 25 of the probe 26 is subsequently co-moulded with a plastics connector 27 (Figures 10 and 11) whereby the connector 27 is integrated with the sensor 15. This co-moulding is effected in a suitable mould which includes an element for preventing the bridge 19 from being covered with the plastics material. Preferably this element is cylindrical in shape whereby a circular aperture 28 is formed in the plastics of each face of the connector 27. The connector 27 includes the usual portion 31 for supporting the cables 23 and a portion 32, for example of annuler shape, for protecting the probe 26.

Finally, the bridge 19 is cut with a punch so as to separate the two pins 17 and 18 of the insert 16 electrically and form a single through hole 29 with the apertures 28. The sensor 15 thus formed may easily be connected to a support 33 (Figure 3) provided with a similar hole 34, for example by means of a plastics pin 35 having a resilient shank 36. This shank 36 has annular ribs which snap engage in the hole 29 and in the hole 34 by simple pressure on the pin 35.

The sensor 15 may also be used as an insert in a further plastics moulding operation in a suitable mould. In particular, the sensor 15 may be co-moulded with an additional connector 37 (Figure 4) or with a second sensor, whose plastic is inserted in the hole 29. The additional connector 37 may in turn be connected to a support 38, for example by a screw 39 and a washer 41.

Moreover the sensor 15 may be co-moulded in one of a plurality of moulds so as to be oriented in various positions relative to the additional connector 37 to form various arrangements of the sensor 15. More particularly, whenever the additional connector 37 has a hole similar to the hole 29, arrangements of two or more sensors 15 and/or connectors 27, 37 may be obtained by means of a connecting element 42 co-moulded separately or together with the connector 37. Several examples of such arrangements are illustrated in the schematic drawings a) to f) of Figure 12 which does not require any further explanation.

From what has been explained above, the advantages of the sensor 15 of the invention over known sensors will be clear. Indeed, both the welding of the terminals 25 and co-moulding with the integrated connector 27 occur when the two pins 17 and 18 of the insert 16 are still connected together by the bridge 19 so that any risk of deformation of the insert 16 is avoided. Furthermore, the hole 29 allows numerous connections and arrangements of the sensor 15 with other elements of a piece of apparatus to be achieved.

It is understood that various modifications and improvements may be made to the sensor described without departing from the scope of the claims. For example, one of the two weldings of the pins 17 and 18 to the terminals 25 of the probe 26 may be omitted.

## Claims

1. A fluid-temperature sensor integrated with a connector, comprising a probe (26) having two terminals (25) connected electrically to a metal insert (16), the insert (16) being formed by two flat pins (17,18) integral with an intermediate bridge (19) and each having a portion (24) bent over for gripping the corresponding terminal (25) of the probe (26), characterised in that the insert (16) is co-moulded and integrated with the connector (27), an aperture (28) being formed in the connector (27) which leaves the bridge (19) uncovered.

2. A sensor according to Claim 1, characterised in that the bridge (19) is cut after the co-moulding so as to form a connection through-hole (29) in correspondence with the aperture (28).

3. A sensor according to Claim 2, characterised in that the hole (29) is adapted to receive pin (35) snap engageable with a fixed support (33).

4. A sensor according to Claim 2, characterised in that the hole (29) is adapted to allow the further co-moulding of the sensor with an additional connector (37,42).

5. A sensor according to Claim 4, characterised in that the further co-moulding may be effected with two or more sensors (15) and/or connectors (27,37,42) in any one of a series of relative positions.

6. A sensor according to one of the preceding Claims, characterised in that the insert (16) is connected to two cable terminals (22) before being co-moulded with the integrated connector (37).

7. A sensor according to one of the preceding Claims, characterised in that the terminals (25) of the probe (26) are further connected to the said pins (17,18) by electrical resistance welding and by soldering with the addition of solder material (20) whereby the reliability of the connection is increased.

## Patentansprüche

1. In einer Fassung integrierter Fluid-Temperatur-Sensor, welcher eine Sonde (26) mit zwei elektrisch mit einem Metalleinsatz (16) verbundenen Ahschlüssen (25) aufweist, wobei der Einsatz (16) von zwei einstückig mit einer Zwischenbrücke (19) verbundenen flachen Stiften (17, 18) gebildet wird, von denen jeder einen zum Fassen des entsprechenden Anschlusses (25) der Sonde (26) umgebogenen Abschnitt (24) besitzt,
**dadurch gekennzeichnet,**
daß der Einsatz (16) in eine Fassung (27) eingebettet und mit dieser integral verbunden ist, wobei in der Fassung (27) eine die Brücke (19) nicht verdeckende Öffnung (28) vorgesehen ist.

2. Sensor gemäß Anspruch 1, dadurch gekennzeichnet, daß die Brücke (19) nach dem Einbetten durchtrennt wird, um eine mit der Öffnung (28) übereinstimmende Verbindungsöffnung (29) zu bilden.

3. Sensor gemäß Anspruch 2, dadurch gekennzeichnet, daß die Öffnung (29) derart ausgebildet ist, daß ein mit einer feststehenden Halterung (33) verrastbaren Stift (35) in sie einführbar ist.

4. Sensor gemäß Anspruch 2, dadurch gekennzeichnet, daß die Öffnung (29) derart ausgebildet ist, daß sie ein weiteres Einbetten des Sensors in eine zusätzliche Fassung (37, 42) ermöglicht.

5. Sensor gemäß Anspruch 4, dadurch gekennzeichnet, daß die weitere Einbettungsvorgang von zwei oder mehreren Sensoren (15) und/oder Fassungen (27, 37, 42) in jeder beliebigen von mehreren Relativpositionen ausführbar ist.

6. Sensor gemäß einem der vorangegangenen Ansprüche, dadurch gekennzeichnet, daß der Einsatz (16) vor seiner integralen Einbettung in der Fassung (37) mit zwei Kabelanschlüsse (22) verbunden ist.

7. Sensor nach einem der vorangegangenen Ansprüche, dadurch gekennzeichnet, daß die Anschlüsse (25) der Sonde (26) mit den Stiften (17, 18) zusätzlich durch elektrisches Widerstandsschweißen und Löten unter Zuführung von Lötmaterial (20) verbunden sind, wodurch die Zuverlässigkeit der Verbindung erhöht wird.

## Revendications

1. Capteur de température d'un fluide intégré à un connecteur, comprenant un palpeur (26) ayant deux bornes (25) reliées électriquement à un élément rapporté (16) métallique, l'élément rapporté (16) étant formé par deux broches plates (17, 18) solidaires d'un pont (19) intermédiaire et ayant chacune une partie (24) recourbée destinée à saisir la borne (25) correspondante du palpeur (26), caractérisé en ce que l'élément rapporté (16) est co-moulé et intégré au connecteur (27), un orifice (28) étant formé dans le connecteur (27) qui laisse le pont (19) découvert.

2. Capteur selon la revendication 1, caractérisé en ce que le pont (19) est coupé après le co-moulage de façon à former un trou de passage (29) de liaison en correspondance avec l'orifice (28).

3. Capteur selon la revendication 2, caractérisé en ce que le trou (29) est apte à recevoir une broche (35) pouvant venir en prise d'un coup sec avec un support fixe (33).

4. Capteur selon la revendication 2, caractérisé en ce que le trou (29) est apte à permettre le co-moulage ultérieur du capteur avec un connecteur supplémentaire (37, 42).

5. Capteur selon la revendication 4, caractérisé en ce que le co-moulage ultérieur peut être effectué avec deux capteurs (15), ou plus, et/ou des connecteurs (27, 37, 42) dans n'importe quelle position relative d'une série de positions relatives.

6. Capteur selon l'une des revendications précédentes, caractérisé en ce que l'élément rapporté (16) est relié à deux bornes (22) de câble avant d'être comoulée avec le connecteur (37) intégré.

7. Capteur selon l'une des revendications précédentes, caractérisé en ce que les bornes (25) du palpeur (26) sont, en outre, reliées auxdites broches (17, 18) par soudage électrique par résistance et par brasage en ajoutant un matériau de brasage (20), la fiabilité de la liaison étant, de ce fait, augmentée.
